# EUROPEAN PATENT SPECIFICATION

(11) **EP 0 537 635 B1**
(45) Date of publication and mention of the grant of the patent: **12.07.1995**
(21) Application number: 92117270.6
(22) Date of filing: 09.10.1992
(51) Int. Cl.: C04B 38/02, C03C 11/00

(54) **Expansion agent for ceramic material, consisting of mixtures of wastes from aluminium production**
Ausdehnungsmittel für keramische Materialien auf Basis von Zusammensetzungen von Abfällen aus der Aluminium-Herstellung
Agent d'expansion pour matériaux céramiques, à base d'un mélange de déchets de la production d'aluminium

(30) Priority: 18.10.1991 IT MI912763
(43) Date of publication of application: 21.04.1993
(73) Proprietor: CONTENTO TRADE di Cioffi Ilaria e C. S.A.S., 33020 Valpicetto di Rigolato (Udine) (IT)
(72) Inventor: Cioffi, Flavio, I-33100 Udine (IT); Contento, Maria Pia, I-33100 Udine (IT)
(74) Representative: Gervasi, Gemma, Dr.

(56) References cited:
- EP-A- 0 242 872
- DE-A- 2 309 500
- DE-A- 3 150 993
- FR-A- 2 235 893
- FR-A- 2 439 621
- GB-A- 988 479
- GB-A- 1 341 652
- CHEMICAL ABSTRACTS, vol. 105, No. 22, 1 December 1986, Columbus, Ohio, US; abstract no. 196326q, S. NAGASHITANI ET AL. 'Inorganic foaming composition for building material' page 335

## Description

### FIELD OF THE INVENTION

This invention concerns an expansion agent for ceramic material, consisting of a mixture of wastes from primary and/or secondary aluminium production, the process for the preparation of said expansion agent, the expanded ceramic material containing said expansion agent, the process for the preparation of said ceramic material and the use of same in the building industry.

### PRIOR ART

The wastes leaving the aluminium processing are a very serious ecological problem.

It is known that aluminium is mainly produced by two different methods, i.e.:
A) production of primary aluminium consisting of alumina baking in reducing furnaces. The aluminium ingots obtained can be either hot-rolled or melted again in proper furnaces;
B) production of secondary aluminium obtained from aluminous scraps baking in the presence of flux salts in reducing furnaces.

Also the aluminium ingots obtained by the latter method can be hot-or cold-rolled or melted again in proper furnaces with a view to manufacturing complex elements.

As concerns secondary aluminium production, the addition of the said flux salts, essentially consisting of alkali metal chlorides, is meant for lowering the melting temperature and, at the same time, protecting from any possible oxidation the upper part of the material being melted.

Therefore, the aluminium processing wastes are essentially of two types:
a) fine powders obtained by the grinding of foams from smelting furnaces of primary or secondary aluminium ingots;
b) saline slags forming the residue after secondary aluminium production.

The fine powders obtained by foams grinding contain aluminium and/or aluminium/magnesium oxides in high concentrations (35-80%), aluminium slags in the metallic state and as nitride, sulphide, carbide (5-15%), silicon in the metallic state, as silicon oxide and silicates (5-30%), alkaline metal fluorides, chlorides, and sulphates (5-30%) as well as low quantities of other compounds, such as heavy metal oxides, sulphides, and sulphates (1-5%).

The saline slags contain alkaline metal chlorides in high concentrations (50-75%), aluminium oxides (5-15%), silicon oxides (5-10%), or complex oxides of aluminium and of other heavy metals (5-20%) as well as aluminium and silicon in the metallic state (3-10%), complex silicon aluminates (1-5%), and other halides in trace amounts.

The aforesaid wastes have the form of granules and of anhydrous blocks of variable particle size.

Since both types of wastes contain metallic aluminium and halides, gas evolution takes place in a few minutes on their coming into contact with water. Besides hydrogen, which is evolved by reaction of metallic aluminium with water, said wastes produce considerable quantities of ammonia, phosphine, methane, and hydrogen sulphide.

GB-A-1 341 652 describes a method of producing a gas developing agent for cellular concretes comprising crushing slags resulting from the melting of aluminium alloys, separating from the crushed slags the fraction having a particle size from 0,3 to 1,2 mm and containing up to 70 wt% of metallic particles, and grinding the said separated particle fraction.

Japanese patent No. 89016795 describes a process for the production of concrete or lightened bricks based on the use, as expansion agents, of unidentified wastes from aluminium production.

However, the process described in the aforesaid patent finds no application due to the evolution of said toxic gases taking place when the wastes, i.e. both the fines obtained by foams grinding and the saline slags, come into contact with water.

It follows that the production of concrete and lightened bricks on the basis of said technology is hazardous and, therefore, hardly feasible.

Furthermore, since said materials contain water-soluble chlorides and heavy metals oxides, the disposition of same in dumping sites is potentially hazardous.

This is one reason why plants for chlorides separation by washing and recrystallization were implemented. The product obtained from the plants is used for the melting of new scraps, while the insoluble wastes are sent to dumping.

However, the construction, operation, and maintenance costs of said plants are extremely high; likewise, the cost of the produced salts exceeds that of the salts commonly available on the market.

In addition, all plants meant for this purpose involve considerable operational problems, especially due to the variety of wastes to be treated.

Therefore, the need of finding a possible utilization of the aforesaid two types of wastes, which would not bring about the drawbacks of the technologies known and described above, was deeply felt.

### THIS INVENTION

The Applicant has actually found that the aforesaid wastes can be used as agents capable of expanding ceramic materials at a high temperature.

Therefore, the subject of this invention is an expansion agent composed of a mixture of
a) fine powders obtained by the grinding of foams from smelting furnaces of primary and/or secondary aluminium ingots;
b) saline slags forming the residue after secondary aluminium production.

In the expansion agent, subject of this invention, the weight ratio of component (a) to component (b) is generally of the order of 1 to 99%, preferably of 25 to 75%.

The expansion agent as per this invention may be added with adsorbents with a view to preventing gas evolution on the mixture coming into contact with water; the preferred concentrations of said adsorbents (dry basis) range from 0.1 to 20% by wt.

The adsorbers may be, for example, zeolites or diatomaceous rocks or sepiolites.

The scope of this invention also includes the process for the preparation of said expansion agent, which consists of the following steps:
I) separate dry-grinding of component (a) and of component (b) to an average particle size below 500»m,
II) mixing of components (a) and (b) in the above ratios in the presence of the aforesaid adsorbents, if any.

The scope of this invention also includes the expanded ceramic material containing the said expansion agent.

In particular, the ceramic material contains the following components:
1) the expansion agent as per this invention in concentrations of 0.1 to 70% (dry basis), preferably of 3 to 25%;
2) a ceramic cement or a material with high contents of silicates and/or aluminates and/or silicon aluminates, preferably in the dry state and in variable ratios depending on the degree of expansion expected for the fired product.

The following ceramic cements are preferred: clays, such as illite, smectite, montmorillonite, bauxite, and laterite; alumina, ground glass, minds from granite processing, red muds from bauxite processing, ashes from coal combustion, cinders from thermal decomposition, zeolite tuffs, diatomaceous rocks.

Included in the scope of this invention is also the process for the preparation of the said ceramic material, which consists of the following steps:
i) mixing of component (1), i.e. the expansion agent as per this invention, with component (2) in quantities giving the aforesaid concentrations of component (1) in the final dry mixture;
ii) moistening of the mixture obtained in (i) generally by addition of water in quantities giving water concentrations in the mixture of 1 to 50% by wt., preferably of 5 to 25%;
iii) machining of the raw mixture produced, i.e. - depending on the finished product to be obtained - drawing or granulating or pressure forming;
iv) drying of the mixture obtained;
v) firing of the ceramic material by heating same to the softening temperature for the time required for complete expansion;
vi) slow cooling of the ceramic material to prevent embrittlement.

For the purpose of preventing undesired gas evolutions from the raw and moist mixtures, the process, subject of this invention, envisages a shortened time lag between moistening (ii) and drying (iv).

For this purpose, in the case of granular materials, granulation and drying should be better performed in a single apparatus, i.e. in a high turbulence drier.

The kiln for ceramic material firing - step (v) of the process envisaged herein - may be of the static or tunnel or roller or fluidized-bed or rotary type, depending on the finished product to be obtained, on the thermal cycle selected, and on the desired material capacity.

In any case, in said kiln the material is to be heated to its softening temperature, i.e. to the temperature range at which it becomes plastic and firing crystallization of silicates, if any, is completed (silicates crystallization on the nuclei of the alkaline and/or heavy metal oxides that are present both in clays and in silicate and silicon aluminium wastes).

As a matter of fact, it is just at the softening temperature that the outer crust of each component of the ceramic material envisaged in this invention becomes vapourproof and the expansion stage starts. The softening and expansion temperatures of the single components of the ceramic material envisaged in this invention vary depending on the type of ceramic cement used, on the ratio of cement to expansion agent, on the ratio among wastes or of component (a) to component (b) in the expansion agent, on the temperature gradient; however, said temperatures are generally higher than 600°C and lower than 1300°C, preferably between 900°C and 1200°C.

The ceramic material shall remain at its softening temperature to complete expansion, the time necessary for said expansion being generally in the range of 1 to 10 min., preferably of 3 to 8 min.

Then, it is to be cooled slowly to prevent any thermal shock that might cause its embrittlement. Cooling generally takes 1 to 10 hrs., preferably 4 to 6 hrs.

During expansion, when component (2) in the ceramic material as per this invention essentially consists either of silicates or of silicon aluminates, firing crystallization of the ceramic material takes place, i.e. silicates crystallization on the nuclei of alkaline and/or heavy metal oxides, which are present both in clays and in silicate and silicon aluminium wastes. Said crystallization makes the ceramic material both water-tight and highly resistant to the attack by chemical agents and to mechanical stresses.

Tests carried out on the expanded ceramic material as per this invention showed volume gravity of 400 to 1,500 kg/m3, with water absorption values after 24 hrs. below 5%, generally from 1 to 2%, and compressive strength values between 2 and 100 N/mm2.

The expanded ceramic material being the subject of this invention is used either as an aggregate for highly heat insulating hydraulic and/or bituminous mixes or as is for the production of construction elements meant for lining, stopping off, and heat insulating.

The following examples are outlined for illustrating, purposes of this invention.

### EXAMPLE 1

Saline slags (20 parts by wt.) from a secondary aluminium production unit and fine powders (80 parts by wt.) obtained by the grinding of foams from melted primary and secondary aluminium ingots, are dry-ground to a particle size below 200»m.

The mixture obtained is thoroughly mixed with dry illite (400 parts by wt.) of particle size below 500»m.

The resulting mixture is moistened with water (20%) and granulated in a pan granulator.

The granules are dried in a ventilated oven at 105°C to constant weight; then, they are fed to a static muffle kiln where they are heated in 4 hrs. to 1,200°C.

After a 5-minute residence at 1,200°C they are cooled in 4 hrs. to room temperature.

The obtained ceramic granules have the following characteristics:

| | |
|---|---|
| Average vol.mass of the granules | 700 kg/m3 (UNI 7549/5) |
| Soaking coefficient after 24 hrs. | 3% (UNI 7549/6) |
| Compressive strength | 3N/mm2 (UNI 7549/7) |
| Soluble chlorides content | <0.05% (UNI 8520/12) |

By extraction tests in acetic acid according to CNR IRSA's method, said granules show eluate values below the limit values established in Table A of the Decree of the President of the Republic 915/82.

### EXAMPLE 2

Saline slags (30 parts by wt.) from a secondary aluminium production unit and fine powders (70 parts by wt.) obtained by the grinding of foams from melted primary and secondary aluminium ingots, are dry-ground to a particle size below 200»m.

The mixture obtained is thoroughly mixed with dry diatomaceous rock (350 parts by wt.) of particle size below 500»m. The resulting mixture is moistened with water (25%) and granulated in a pan granulator.

The granules are dried in a ventilated oven at 105°C to constant weight; then, they are fed to a static muffle kiln where they are heated for 4 hrs. to 1,180°C.

After a 5-minute residence at 1,180°C they are cooled in 4 hrs. to room temperature.

The ceramic granules obtained have the following characteristics:

| | |
|---|---|
| Average vol.mass of the granules | 800 kg/m3 (UNI 7549/5) |
| Soaking coefficient after 24 hrs. | 2% (UNI 7549/6) |
| Compressive strength | 8N/mm2 (UNI 7549/7) |
| Soluble chlorides content | <0.05% (UNI 8520/12) |

By extraction tests in acetic acid according to CNR IRSA's method, said granules show eluate values below the limit values established in Table A of the Decree of the President of the Republic 915/82.

### EXAMPLE 3

Saline slags (35 parts by wt.) from a secondary aluminium production unit and fine powders (65 parts by wt.) obtained by the grinding of foams from melted primary and secondary aluminium ingots, are dry-ground to a particle size below 200»m.

The resulting mixture is moistened with water (20%) and granulated in a pan granulator.

The granules are dried in a ventilated oven at 105°C to constant weight; then, they are fed to a static muffle kiln where they are heated in 4 hrs. to 1,210°C.

After a 7-minute residence at 1,210°C they are cooled in 4 hrs. to room temperature.

The ceramic granules obtained have the following characteristics:

| | |
|---|---|
| Mean abs.gr. of the granules | 900 kg/m3 (UNI 7549/5) |
| Soaking coefficient after 24 hrs. | 1% (UNI 7549/6) |
| Compressive strength | 9N/mm2 (UNI 7549/7) |
| Soluble chlorides content | <0.05% (UNI 8520/12) |

By extraction tests in acetic acid according to CNR IRSA's method, said granules show eluate values below the limit values established in Table A of the Decree of the President of the Republic 915/82.

## Claims

1. Expansion agent for expanded ceramic material consisting of a mixture of:
a) fine powders obtained by the grinding of foams from primary and/or secondary aluminium ingots smelting furnaces;
b) saline slags from secondary aluminium production.

2. Expansion agent as per claim 1 characterized by component (a) being composed of: aluminium and/or aluminium-magnesium oxides in concentrations of 35 to 80% by wt., aluminium in the metallic state and as nitride, sulphide, carbide, in total concentrations of 5 to 15%, silicon in the metallic state, as silicon dioxide and silicates in concentrations of 5 to 30% by wt., alkaline metal fluorides, chlorides, and sulphates in concentrations of 5 to 30% by wt., and heavy metal oxides, sulphides, and sulphates in concentrations of 1 to 5% by wt.

3. Expansion agent as per claim 1 characterized by component (b) being composed of alkaline metal chlorides in concentrations of 50 to 75% by wt., aluminium oxides in concentrations of 5 to 15% by wt., silicon oxides in concentrations of 5 to 10% by wt., complex oxides of aluminium and of other heavy metals in concentrations of 5 to 20% by wt., aluminium and silicon in the metallic state in concentrations of 3 to 10% by wt., complex silicon aluminates in concentrations of 1 to 5%, and other halides in trace quantities.

4. Expansion agent as per claim 1 characterized by component (a) to component (b) weight ratios ranging from 1 to 99%.

5. Expansion agent as per claim 4 characterized by component (a) to component (b) weight ratios ranging from 25 to 75%.

6. Expansion agent as per claim 1 characterized by the presence, if any, of an additive c) consisting of gas adsorbers.

7. Expansion agent as per claim 6 characterized by the presence of adsorbents in concentrations of 0.1 to 20% by wt. (dry basis).

8. Expansion agent as per claim 6 characterized by the adsorbers being zeolites or diatomaceous rocks or sepiolites.

9. Process for the preparation of the expansion agent as per claims 1 through 8 consisting of the following steps:
I) separate dry-grinding of components (a) and (b) to an average particle size below 500»m;
II) mixing of component (a) with component (b) in quantities giving (a) to (b) ratios of 1 to 99%; additive (c) may also be added in concentrations of 0.1 to 20% by wt. (dry basis).

10. The process for the preparation of the expansion agent as per claim 9 characterized by component (a) being mixed with component (b) in step I in (a) to (b) ratios of 25 to 75% by wt.

11. Expanded ceramic material containing the expansion agent as per claims 1 through 8.

12. The expanded ceramic material as per claim 11 consisting of:
1) expansion agent in a 0.1 to 70% ratio
2) a ceramic cement or a material with high contents of silicates and/or aluminates and/or silicon aluminates.

13. The ceramic material as per claim 12 containing the expansion agent in concentrations of 3 to 25% by wt.

14. The ceramic material as per claim 12 characterized by component (2) being clay.

15. The ceramic material as per claim 14 characterized by the clay being illite or smectite or montmorillonite or bauxite or laterite.

16. The expanded ceramic material as per claim 12 characterized by component (2) being alumina or ground glass or muds from granite processing or red muds from bauxite processing or ashes from coal combustion or cinders from thermal decomposition or zeolite tuffs or diatomaceous rocks.

17. Process for the preparation of the ceramic material as per claim 12, consisting of the following steps:
i) mixing of component (1) with component (2) in quantities giving component (1) concentrations in the final dry mixture of 0.1 to 70%;
ii) moistening of the mixture obtained in step (i) generally by addition of water in quantities giving water concentrations in the mixture of 1 to 50% by wt.;
iii) processing of the raw mixture obtained depending on the finished product to be obtained;
iv) drying of the mixture obtained;
v) firing of the ceramic material by heating the same to the softening temperature until complete expansion;
vi) slow cooling of the ceramic material to prevent embrittlement.

18. The process as per claim 17 characterized by component (1) being mixed with component (2) in step (i) in quantities giving component (2) concentrations in the final dry mixture of 3 to 25%.

19. The process as per claim 17 characterized by water being added in step (ii) in quantities giving water concentrations in the raw mixture of 5 to 25%.

20. The process as per claim 17 characterized by the raw mixture being drawn or granulated or pressure formed in step (iii).

21. The process as per claim 20 characterized - on the raw mixture granulation - by granulation (iii) and drying (iv) being carried out in a single apparatus.

22. The process as per claim 21 characterized by the drier being high-turbulence type.

23. The process as per claim 17 characterized by the temperatures of step (v) being higher than 600°C and lower than 1300°C.

24. The process as per claim 23 characterized by the temperatures of step (vi) ranging from 900°C to 1200°C.

25. The process as per claim 17 characterized by a residence time of the ceramic material at the softening temperature (step vi) lasting from 1 to 10 min.

26. The process as per claim 25 characterized by a residence time lasting from 3 to 8 min.

27. The process as per claim 17 characterized by cooling (vi) lasting from 1 to 10 hrs.

28. The process as per claim 27 characterized by the cooling lasting from 4 to 6 hrs.

29. The process as per claim 17 characterized by step (v) being carried out in a static- or tunnel- or roller- or fluidized-bed- or rotary-type kiln.

30. Use of the expanded ceramic material as per claim 11 as an aggregate for highly heat insulating hydraulic and/or bituminous mixes.

31. Use of the expanded ceramic material as it is according to claim 11 for the production of construction elements meant for lining, stopping off, and heat insulating.

## Patentansprüche

1. Ausdehnungsmittel für ausgedehnte keramische Materialien auf Basis von einer Zusammensetzung bestehend aus:
a) feinen Pulver erhalten aus dem Mahlen von Schaumen aus Schmelzofen für primäre und sekundäre Aluminiumbarren;
b) Salzschlammen aus sekundärer Aluminiumsherstellung.

2. Ausdehnungsmittel nach Anspruch 1, dadurch gekennzeichnet, daß Bestandteil (a) aus folgendes besteht: Aluminiumoxyd und/oder Aluminium-Magnesiumoxyd in einer Konzentration von 35-80% im Gewicht, Alumium in metallischem Zustand und als Nitrid, Sulfid, Karbid, in einer Gesamtkonzentration von 5-15%, Silizium in metallischem Zustand, als Siliziumdioxyd und Silikaten in einer Konzentration von 5-30% im Gewicht, Alkalimetall-Fluoride, -Kloride und -Sulfate in einer Konzentration von 5-30 im Gewicht und Schwermetalloxyde, -sulfide und -sulfate in einer Konzentration von 1-5% im Gewicht.

3. Ausdehnungsmittel nach Anspruch 1, dadurch gekennzeichnet, daß Bestandteil (b) aus folgendem besteht: Alkalimetall-Kloride in einer Konzentration von 50-75% im Gewicht, Aluminiumoxyde in einer Konzentration von 5-15% im Gewicht, Siliziumoxyde in einer Konzentration von 5-10% im Gewicht, komplexe Aluminiumoxyde und andere Schwermetalle in einer Konzentration von 5-20% im Gewicht, Aluminium und Silizium in metallischem Zustand in einer Konzentration von 3-10% im Gewicht, komplexe Siliziumaluminate in einer Konzentration von 1-5% im Gewicht und andere Halogenide in Spuren.

4. Ausdehnungsmittel nach Anspruch 1, dadurch gekennzeichnet, daß das Gewichtsverhältnis zwischen Bestandteil (a) und Bestandteil (b) von 1% bis 99% sich erstreckt.

5. Ausdehnungsmittel nach Anspruch 4, dadurch gekennzeichnet, daß das Gewichtsverhältnis zwischen Bestandteil (a) und Bestandteil (b) von 25% bis 75% sich erstreckt.

6. Ausdehnungsmittel nach Anspruch 1 gekennzeichnet durch die mögliche Anwesenheit eines Zusatzes (c) bestehend aus Gasabsorbtionsmitteln.

7. Ausdehnungsmittel nach Anspruch 6 gekennzeichnet durch die Anwesenheit von Absorbtionsmitteln in einer Konzentration von 0,1-20% im Gewicht (trockene Base).

8. Ausdehnungsmittel nach Anspruch 6 dadurch gekennzeichnet, daß die Absorbtionsmittel Zeolith oder zweiatomige Steine oder Meerschaum sind.

9. Verfahren für die Vorbereitung vom Ausdehnungsmittel nach Ansprüche 1-8, wobei dieses Verfahren die folgende Stufen enthält:
I) getrenntes trockenes Mahlen von Bestandteil (a) und (b) bis zu einer mittleren Größe der Teilchen unter 500 »m;
II) Mischung von Bestandteil (a) mit Bestandteil (b) in Mengen, die ein Verhältnis von 1% bis 99% ergeben; Zusatz (c) kann auch in Konzentrationen von 0,1% bis 20% im Gewicht (trockene Base) hinzugefügt werden.

10. Verfahren für die Vorbereitung vom Ausdehnungsmittel nach Anspruch 9 dadurch gekennzeichnet, daß Bestandteil (a) mit Bestandteil (b) in Stufe I gemischt wird, wobei diese Mischung ein Verhältnis von 25% bis 75% im Gewicht hat.

11. Ausgedehntes keramischen Material enthaltend das Ausdehnungsmittel nach Ansprüche 1-8.

12. Ausgedehntes keramischen Material nach Anspruch 11 bestehend aus:
1) Ausdehnungsmittel mit einem Verhältnis von 0,1% bis 70%;
2) ein keramisches Beton oder Material enthaltend große Mengen von Silikaten und/oder Aluminaten und/oder Siliziumaluminaten.

13. Das keramische Material nach Anspruch 12 enhaltend das Ausdehnungsmittel in einer Konzentration von 3% bis 25% im Gewicht.

14. Das keramische Material nach Anspruch 12 dadurch gekennzeichnet, dar Bestandteil (1) Ton ist.

15. Das keramische Material nach Anspruch 14 dadurch gekennzeichnet, daß der Ton Illit, Smectite, Montmorillonit oder Bauxit oder Laterit ist.

16. Das ausgedehnte keramische Material nach Anspruch 12, dadurch gekennzeichnet, daß Bestandteil (2) Aluminium- oder Mattglas oder Schlämme aus Granitverarbeitung oder rote Schlämme aus Bauxitverarbeitung oder Aschen aus Kohlverbrennung oder Vulkanaschen aus Wärmezerlegung oder Zeolithtuff oder zweiatomige Steine ist.

17. Verfahren für die Vorbereitung vom keramischen Material nach Anspruch 12, wobei dieses Verfahren die folgende Stufen enthält:
i) Mischung von Bestandteil (1) mit Bestandteil (2) in Mengen, die eine Konzentration von 0,1% bis 70% von Bestandteil (1) in der endgültigen trockenen Mischung ergeben;
ii) Anfeuchtung von der in Stufe (i) vorbereiteten Mischung, normalerweise beim Hinzuführen von Wasser in Mengen, die eine Wasserkonzentration von 1% bis 50% im Gewicht in der Mischung ergeben;
iii) Verarbeitung der erhaltenen rohen Mischung gemäß dem gewünschten endgültigen Produkt;
iv) Trocknung der erhaltenen Mischung;
v) Zündung des keramischen Materials durch Erwärmung des Materials bis zur Erweichenstemperatur und bis zur totalen Ausdehnung;
vi) langsame Kühlung des keramischen Materials um das Schwächen zu verhindern.

18. Das Verfahren nach Anspruch 17, dadurch gekennzeichnet, daß Bestandteil (1) mit Bestandteil (2) in Stufe (i) in solchen Mengen gemischt wird, die eine Konzentration von Bestandteil (2) von 3% bis 25% in der endgültigen trockenen Mischung ergeben.

19. Das Verfahren nach Anspruch 17 dadurch gekennzeichnet, daß Wasser in Stufe (ii) in solchen Mengen hinzugefügt wird, die eine Wasserkonzentration von 5% bis 25% in der rohen Mischung ergeben.

20. Das Verfahren nach Anspruch 17 dadurch gekennzeichnet, daß die rohe Mischung in Stufe (iii) gezogen, granuliert oder geformt durch den Druck wird.

21. Das Verfahren nach Anspruch 20 dadurch gekennzeichnet, daß, während der Granulation von der rohen Mischung, Granulation (iii) und Trocknung (iv) in einer einzelnen Vorrichtung geschehen.

22. Das Verfahren nach Anspruch 17, dadurch gekennzeichnet, daß der Trockner ein Hohe-Tubulenz-Trockner ist.

23. Das Verfahren nach Anspruch 17, dadurch gekennzeichnet, daß die Temperature in Stufe (vi) höher als 600°C und niedriger als 1300°C sind.

24. Das Verfahren nach Anspruch 23, dadurch gekennzeichnet, daß die Temperature in Stufe (vi) von 900°C bis 1200°C sich erstrecken.

25. Das Verfahren nach Anspruch 17 gekennzeichnet durch einen Aufenthalt vom keramischen Material in der Erweichenstemperatur (Stufe vi) von 1 bis 10 Minuten.

26. Das Verfahren nach Anspruch 25 gekennzeichnet durch einen Aufenthalt von 3 bis 8 Minuten.

27. Das Verfahren nach Anspruch 17 gekennzeichnet durch eine Kühlung (vi) von 1 bis 10 Stunden.

28. Das Verfahren nach Anspruch 27 gekennzeichnet durch eine Kühlung von 4 bis 6 Stunden.

29. Das Verfahren nach Anspruch 17 dadurch gekennzeichnet, daß Stufe (v) in einem Ofen, der statisch ist oder ein Kupolofen, ein Auszugsofen, ein Fluß-Bettofen oder ein Drehofen ist.

30. Der Gebrauch vom ausgedehnten keramischen Material nach Anspruch 11 als Aggregat für thermisch isolierende hydraulische und/oder bituminöese Mischungen.

31. Gebrauch vom ausgedehnten keramischen Material nach Anspruch 11 für die Herstellung von Bauelemente benutzt als Überzug, Isolierung und Wärmeschutz.

## Revendications

1. Agent d'expansion pour matériaux céramiques expansés à base d'un mélange de:
a) fines poudres obtenues par un broyage des mousses résultant des fours de fusion pour lingots de aluminium primaire et/ou secondaire;
b) Boues salines résultant de la production d'aluminium secondaire.

2. Agent d'expansion selon la revendication 1, caracterisé en ce que le composant (a) est formé par: oxydes d'aluminium et/ou de aluminium-magnesium ayant une concentration de 35-80% en poids, aluminium en état métallique et comme nitrure, sulphure et carbure ayant une concentration totale de 5-15% en poids, silicium en état métallique, comme dioxyde de silicium et silicates ayant une concentration de 5-30% en poids, fluorures, chlorures et sulphates de métaux alcalins ayant une concentration de 5-30% en poids et oxydes, sulphures et sulphates de métaux lourds ayant une concentration de 1-5% en poids.

3. Agent d'expansion selon la revendication 1 caracterisé en ce que le composant (b) est formé par: chlorures de métal alcalin ayant une concentration de 50-75% en poids, oxydes d'aluminium ayant une concentration de 5-15% en poids, oxydes de silicium ayant une concentration de 5-10% en poids, oxydes complexes de aluminium et d'autres métaux lourds ayant une concentration de 5-20% en poids, aluminium et silicium en état métallique ayant une concentration de 3-10% en poids, aluminates complexes de silicium ayant une concentration de 1-5% en poids et autres halogénures en traces.

4. Agent d'expansion selon la revendication 1 caracterisé en ce que le rapport en poids entre composant (a) et composant (b) est compris entre 1% et 99%.

5. Agent d'expansion selon la revendication 4 caracterisé en ce que le rapport en poids entre composant (a) et composant (b) est compris entre 25% et 75%.

6. Agent d'expansion selon la revendication 1 caracterisé par la présence, en cas, d'un additif (c) formé par absorbants de gaz.

7. Agent d'expansion selon la revendication 6 caracterisé par la présence d'absorbants en concentrations de 0,1-20% en poids (base sèche).

8. Agent d'expansion selon la revendication 6 caracterisé en ce que les absorbants sont zéolithes ou roches diatomiques ou sépiolites.

9. Procès pour la préparation de l'agent d'expansion selon les revendications 1-8 formé par les phases suivantes:
I) mouture à sec séparée de composant (a) et de composant (b) jusqu'à obtenir particules ayant une grandeur moyenne au dessous de 500 »m;
II) mélange de composant (a) et composant (b) en quantités qui donnent un rapport entre (a) et (b) de 1-99%; l'additif (c) peut aussi être adjoint en concentrations de 0,1-20% en poids (base sèche).

10. Le procédé pour la préparation de l'agent d'expansion selon la revendication 9 caracterisé en ce que composant (a) est mélangé avec composant (b) dans la phase I avec un rapport entre (a) et (b) de 25-75% en poids.

11. Matérial céramique expansé contenant l'agent d'expansion selon les revendications 1-8.

12. Le matérial céramique expansé selon la revendication 11 formé par:
1) agent d'expansion avec un rapport de 0,1-70%;
2) un ciment ou un matérial céramique ayant un haut contenu de silicates et/ou aluminates et/ou alumites de silicium.

13. Le matérial céramique selon la revendication 12 contenant l'agent d'expansion en concentrations de 3-25% en poids.

14. Le matérial céramique selon la revendication 12 caracterisé en ce que composant (2) est argile.

15. Le matérial céramique selon la revendication 14 caracterisé en ce que l'argile est illite, smectite, montmorillonite ou bauxite ou latérite.

16. Le matérial céramique expansé selon la revendication 12 caracterisé en ce que composant (2) est aluminium ou verre dépoli ou boues produites par le travail du granit ou boues rouges produites par le travail de la bauxite ou cindres produites par la combustion du charbon ou cindres produites par la décomposition thermique ou tufs de zéolithe ou roches diatomiques.

17. Procès pour la préparation du matérial céramique selon la revendication 12, comprenant les phases suivantes:
i) mélange de composant (1) avec composant (2) en quantités qui donnent des concentrations de composant (1) de 0,1-70% dans le mélange sec final;
ii) humidification du mélange obtenu en phase (i), généralement en ajoutant de l'eau en quantités qui donnent des concentrations d'eau de 1-50% en poids dans le mélange;
iii) travail du mélange brut obtenu selon le produit final que l'on veut obtenir;
iv) séchage du mélange obtenu;
v) allumage du matérial céramique en réchauffant ledit matérial à la température de assouplissement junsqu'à une complète expansion;
vi) lent refroidissement du matérial céramique pour éviter l' affaiblissement.

18. Le procédé selon la revendication 17 caracterisé en ce que composant (1) est mélangé avec composant (2) dans la phase (i) en quantités qui donnent des concentrations de composant (2) de 3-25% dans le mélange sec final.

19. Le procédé selon la revendication 17 caracterisé en ce que l'eau est adjointe dans la phase (ii) en quantités qui donnent des concentrations d'eau de 5-25% dans le mélange brut.

20. Le procès selon la revendication 17 caracterisé en ce que le mélange brut est étiré ou granulé ou formé à pression dans la phase (iii).

21. Le procédé selon la revendication 20 caracterisé en ce que pendant la granulation du mélange brut la granulation (iii) et le séchage (iv) ont lieu dans un unique dispositif.

22. Le procédé selon la revendication 21 caracterisé en ce que le séchoir est du modèle à haute turbulence.

23. Le procédé selon la revendication 17 caracterisé en ce que les températures de la phase (v) sont comprises entre 600°C et 1300°C.

24. Le procédé selon la revendication 23 caracterisé en ce que les températures de la phase (vi) son comprises entre 900°C et 1200°C.

25. Le procédé selon la revendication 17 caracterisé en ce que le matérial céramique reste à la température de assouplissement (phase vi) pour 1-10 minutes.

26. Le procédé selon la revendication 25 caracterisé en ce que le matérial céramique reste à la température de assouplissement (phase vi) pour 3-8 minutes.

27. Le procédé selon la revendication 17 caracterisé en ce que le refroidissement (vi) dure 1-10 heures.

28. Le procédé selon la revendication 27 caracterisé en ce que le refroidissement dure 4-6 heures.

29. Le procédé selon la revendication 17 caracterisé en ce que la phase (v) a lieu dans un four statique ou tunnel ou roulant ou à lit fluidifié.

30. Usage du matérial céramique expansé selon la revendication 11 comme agrégat pour mélanges hydrauliques et/ou bitumeux qui sont des isolants thermiques.

31. Usage du matérial céramique expansé selon la revendication 11 pour la production d'éléments de constrution utilisés pour recouvrir et isoler thermiquement.
